(19) Europäisches Patentamt
European Patent Office
Office européen des brevets

(11) EP 4 589 714 A1

(12) EUROPEAN PATENT APPLICATION
published in accordance with Art. 153(4) EPC

(43) Date of publication:
**23.07.2025 Bulletin 2025/30**

(21) Application number: **23864528.7**

(22) Date of filing: **15.08.2023**

(51) International Patent Classification (IPC):
***H01M 10/0567*** *(2010.01)* ***H01M 10/0525*** *(2010.01)*

(52) Cooperative Patent Classification (CPC):
Y02E 60/10

(86) International application number:
**PCT/CN2023/113028**

(87) International publication number:
**WO 2024/055794 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.09.2022 CN 202211107741**

(71) Applicant: **Shenzhen Capchem Technology Co., Ltd**
**Shenzhen, Guangdong 518118 (CN)**

(72) Inventors:
- **HU, Shiguang**
  **Shenzhen, Guangdong 518118 (CN)**
- **QIAN, Yunxian**
  **Shenzhen, Guangdong 518118 (CN)**
- **SUN, Guiyan**
  **Shenzhen, Guangdong 518118 (CN)**
- **XIANG, Xiaoxia**
  **Shenzhen, Guangdong 518118 (CN)**
- **LIN, Xionggui**
  **Shenzhen, Guangdong 518118 (CN)**

(74) Representative: **Herrero & Asociados, S.L.**
**Edificio Aqua - Agustín de Foxá, 4-10**
**28036 Madrid (ES)**

# (54) LITHIUM ION BATTERY

(57) A lithium-ion battery is provided, comprising a positive electrode, a negative electrode and a non-aqueous electrolyte. The negative electrode comprises a negative electrode material layer containing a silicon-based material, and a phosphorus-containing inactive material layer is formed on the surface of the negative electrode material layer. The non-aqueous electrolyte includes a lithium salt, an organic solvent and an additive of the compound represented by structural formula 1, where n is 0 or 1, X is selected from formula 2 or formula 3, $R_1$ and $R_2$ are each independently selected from H, halogen, an unsubstituted or halogen-substituted hydrocarbon group with 1-5 carbon atoms, formula 4, formula 5, and formula 6, and at least one sulfur atom is present in X, $R_1$ or $R_2$.



Processed by Luminess, 75001 PARIS (FR)

## Description

### Technical Field

The present application belongs to the technical field of secondary batteries, and particularly relates to a lithium-ion battery.

### Background

Lithium-ion batteries have found widespread use in 3C digital devices and new energy-powered vehicles. Because of its high energy density, long cycle life, and environmental benefits, the application possibilities are continually expanding. However, end users in the power sector continue to have urgent needs for increased endurance mileage. Therefore further enhancing the energy density of power batteries is one of the ongoing interests in the field of lithium-ion batteries.

Among the most common positive electrode materials in the lithium-ion battery market, silicon positive electrode material has a much higher theoretical specific capacity than graphite positive electrode material (silicon: 4200 mAh/g, graphite: 372 mAh/g), which has become an important direction in improving the energy density of lithium-ion batteries. According to the charging and discharging principle of silicon-based positive electrode, the alloying of silicon and lithium in the charged state will cause the positive electrode to expand in volume by up to 300%, which will destroy the solid electrolyte interface film on the positive electrode surface. Then, the solvents and additives in the electrolyte will combine with active lithium-ions to create a new interface film again. Therefore, the poor high-temperature storage performance of the negative electrode battery containing silicon has always been a problem.

### Summary of the Invention

The application provides a lithium-ion battery in order to address the issues in the prior art, which include the expansion of the negative electrode's volume during the charging process of the silicon-based negative electrode lithium-ion battery, damage to the solid electrolyte interface film on the negative electrode's surface, and poor storage performance at high temperatures of battery.

In order to solve the above technical problems, the application provides a lithium-ion battery, comprising a positive electrode, a negative electrode and a non-aqueous electrolyte, wherein the negative electrode comprises a negative electrode material layer, the negative electrode material layer comprises a negative electrode active material containing a silicon-based material, and a phosphorus-containing inactive material layer is formed on a surface of the negative electrode material layer; wherein the non-aqueous electrolyte comprises a lithium salt containing $LiPF_6$, a non-aqueous organic solvent and an additive, and the additive comprises a compound represented by structural formula 1:

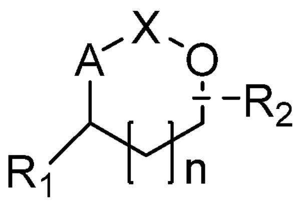

Structural formula 1

where n is 0 or 1, A is O, X is selected from

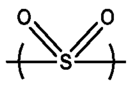 or 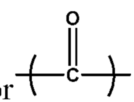,

$R_1$ and $R_2$ are each independently selected from H, halogen, an unsubstituted or halogen-substituted hydrocarbon group with 1-5 carbon atoms,

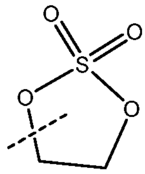, 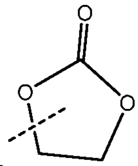 or 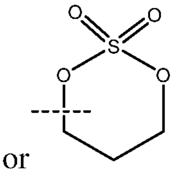,

at least one sulfur atom is present in X, $R_1$ or $R_2$;
the lithium-ion battery meets the following requirements:

$$3.1 \leq \frac{a \times S}{W} \leq 60,\ 0.1 \leq a \leq 1.8,\ 10 \leq S \leq 140 \text{ and } 1.5 \leq W \leq 1.8;$$

where, "a" is a percentage mass content of the compound represented by structural formula 1 in the non-aqueous electrolyte, in %;
"S" is a thickness of the phosphorus-containing inactive material layer formed on the negative electrode material layer surface, in nm; and
"W" is a mass content of the negative electrode active material contained in the negative electrode material layer per unit volume, in g/cm$^3$.

Preferably, the lithium-ion battery meets the following requirements:

$$5.5 \leq \frac{a \times S}{W} \leq 50.$$

Preferably, the percentage mass content (a) of the compound represented by structural formula 1 is 0.1%-1.5% based on the mass of the non-aqueous electrolyte being 100%.
Preferably, the thickness (S) of the phosphorus-containing inactive material layer formed on the negative electrode material layer surface is 30-100 nm.
Preferably, mass content (W) of the negative electrode active material contained in the negative electrode material layer per unit volume is 1.6-1.8 g/cm$^3$.
Preferably, the compound represented by structural formula 1 is at least one selected from the group consisting of the following compounds 1 to 24:

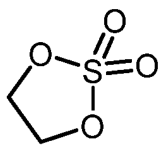
Compound 1

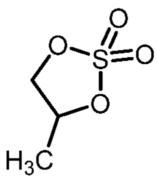
Compound 2

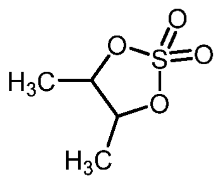
Compound 3

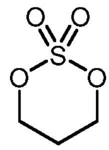
Compound 4

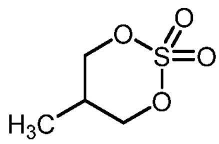
Compound 5

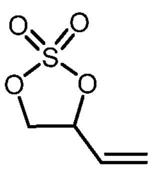
Compound 6

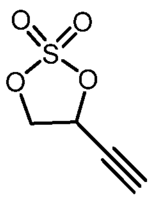
Compound 7

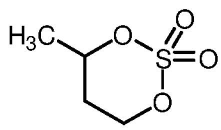
Compound 8

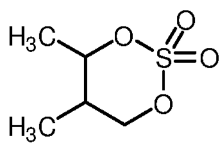
Compound 9

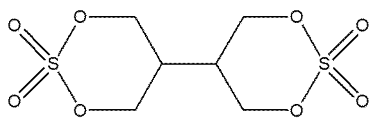

Compound 10

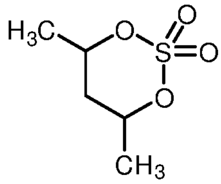

Compound 11

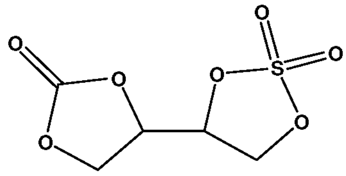

Compound 12

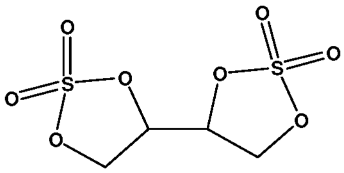

Compound 13

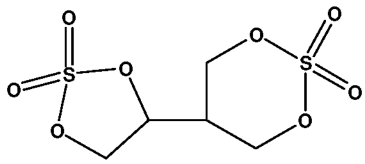

Compound 14

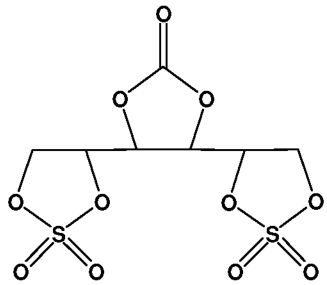

Compound 15

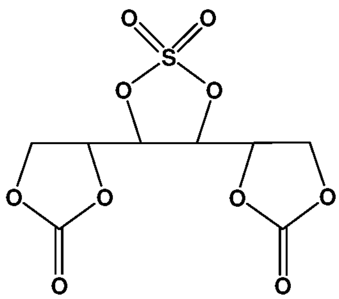

Compound 16

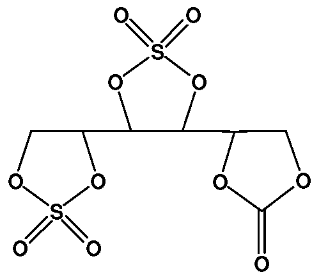

Compound 17

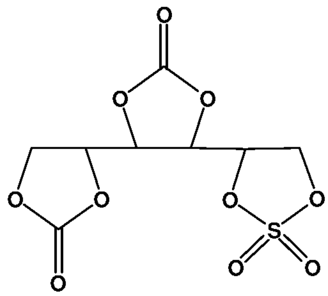

Compound 18

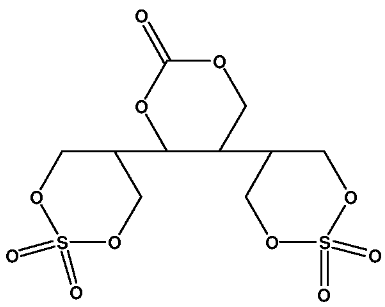

Compound 19

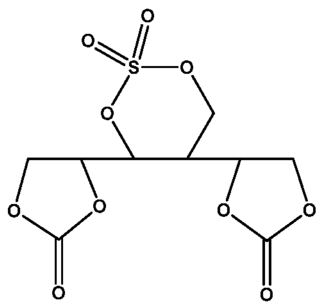

Compound 20

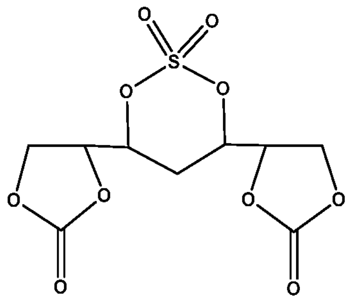

Compound 21

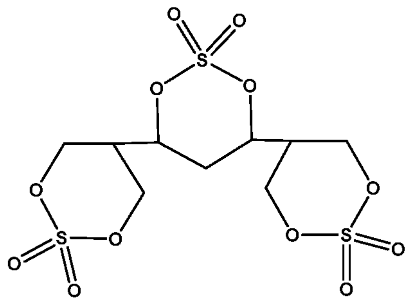

Compound 22

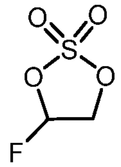

Compound 23

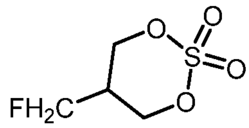

Compound 24.

Preferably, the silicon-based material is selected from simple silicon or a composite material formed by compounding a silicon compound and graphite, and the simple silicon comprises at least one of nano silicon particles, silicon nanotubes, silicon nanowires, micro silicon particles and silicon films; the silicon compound comprises at least one of $SiO_x$ or silicate compound, where $0< x\leq 2$.

Preferably, the lithium salt further comprises at least one selected from the group consisting of $LiPO_2F_2$, $LiBF_4$, LiBOB, $LiSbF_6$, $LiAsF_6$, $LiCF_3SO_3$, LiDFOB, $LiN(SO_2CF_3)_2$, $LiC(SO_2CF_3)_3$, $LiN(SO_2C_2F_5)_2$, $LiN(SO_2F)_2$, LiCl, LiBr, LiI, $LiClO_4$, $LiB_{10}Cl_{10}$, $LiAlCl_4$, lithium chloroborane, lithium lower aliphatic carboxylate with less than 4 carbon atoms, lithium tetraphenylborate and lithium imide; and

a molar concentration of the lithium salt in the non-aqueous electrolyte is 0.8 mol/L-1.5 mol/L.

Preferably, the additive further comprises a supplemental additive, and the supplemental additive comprises at least one of sultone compounds, cyclic carbonate compounds, phosphate compounds, borate compounds and nitrile compounds.

Preferably, an addition amount of the supplemental additive is 0.01%-30% based on the total mass of the non-aqueous electrolyte being 100%.

Preferably, the sultone compound is at least one selected from the group consisting of 1,3-propane sultone, 1,4-butane sultone and 1,3-propylene sultone;

the cyclic carbonate compound is at least one selected from the group consisting of vinylene carbonate, vinylethylene carbonate, fluoroethylene carbonate or a compound represented by structural formula 2;

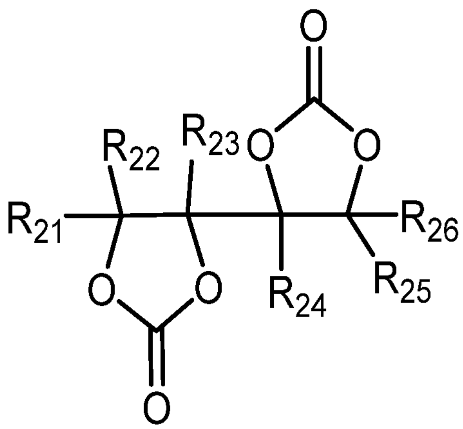

Structural formula 2

in structural formula 2, $R_{21}$, $R_{22}$, $R_{23}$, $R_{24}$, $R_{25}$ and $R_{26}$ are independently selected from one of a hydrogen atom, a halogen atom and a C1-C5 group;

the phosphate compound is at least one selected from the group consisting of tri (trimethylsilane) phosphate, tri (trimethylsilane) phosphite or a compound represented by structural formula 3:

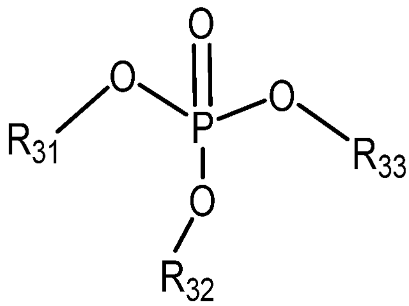

Structural formula 3

in structural formula 3, $R_{31}$, $R_{32}$ and $R_{33}$ are independently selected from a C1-C5 saturated hydrocarbon group, a C1-C5 unsaturated hydrocarbon group, a C1-C5 halogenated hydrocarbon group and $-Si(C_mH_{2m+1})_3$, m is a natural number of 1-3, and at least one of $R_{31}$, $R_{32}$ and $R_{33}$ is an unsaturated hydrocarbon group;

the borate compound is at least one selected from the group consisting of tris (trimethylsilane) borate and tris (triethyl silicane) borate; and

the nitrile compound is at least one selected from the group consisting of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

According to the lithium-ion battery provided by the application, that silicon-based material is adopted as the negative active material in order to get a high energy density for the battery. The inventor(s) conducted extensive research and came to the following creative findings: under the condition that the compound represented by structural formula 1 is added as an additive to the non-aqueous electrolyte, by regulating the relation among the percentage mass content (a) of the compound represented by structural formula 1 in the non-aqueous electrolyte, the thickness (S) of the phosphorus-containing inactive material layer formed on the negative electrode material layer surface, and the mass content (W) of the negative electrode active material contained in the negative electrode material layer per unit volume, the lithium-ion battery can have a high energy density and a high storage capacity retention rate at high temperature. The reason is that the compound represented by structural formula 1 participates in the film formation on the surface of the negative electrode, and the unique element sulfur in the compound represented by structural formula 1 combines with phosphorus-containing molecules in the electrolyte to form a phosphorus-containing inactive material layer with a thickness of 10-140 nm on the surface of the negative electrode material layer. Moreover, when the lithium-ion battery satisfies the relation $3.1 \leq \frac{a \times S}{W} \leq 60$, the interface layer with moderate thickness can provide effective protection for the negative electrode, prevent further degradation or damage to the electrode material, prevent or minimize lithium precipitation from the negative electrode, and lower the rate of expansion and growth of impedance during high-temperature storage. All of these factors improve the battery's performance during high-temperature storage.

**Detailed Description of Preferred Embodiments**

In order to make the technical problems, technical solutions and beneficial effects of the present application more clear, the application will be further explained in detail below with embodiments. It should be understood that the specific embodiments described here are only used to illustrate the application, rather than to limit the application.

The embodiment of the application provides a lithium-ion battery, which comprises a positive electrode, a negative electrode and a non-aqueous electrolyte, wherein the negative electrode comprises a negative electrode material layer, the negative electrode material layer comprises a negative electrode active material containing a silicon-based material, and a phosphorus-containing inactive material layer is formed on a surface of the negative electrode material layer; wherein the non-aqueous electrolyte comprises a lithium salt containing $LiPF_6$, a non-aqueous organic solvent and an additive, and the additive comprises a compound represented by structural formula 1:

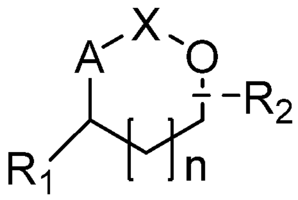

Structural formula 1

where n is 0 or 1, A is O, X is selected from

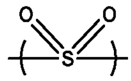 or 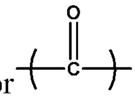,

$R_1$ and $R_2$ are each independently selected from H, halogen, an unsubstituted or halogen-substituted hydrocarbon group with 1-5 carbon atoms,

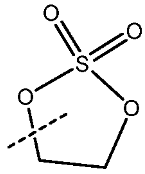, 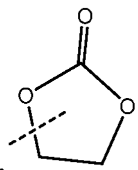 or 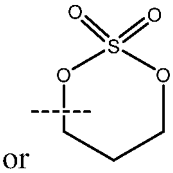,

at least one sulfur atom is present in X, $R_1$ or $R_2$;
the lithium-ion battery meets the following requirements:

$$3.1 \leq \frac{a \times S}{W} \leq 60,\ 0.1 \leq a \leq 1.8,\ 10 \leq S \leq 140 \text{ and } 1.5 \leq W \leq 1.8;$$

where, "a" is a percentage mass content of the compound represented by structural formula 1 in the non-aqueous electrolyte, in %;
"S" is a thickness of the phosphorus-containing inactive material layer formed on the negative electrode material layer surface, in nm; and
"W" is a mass content of the negative electrode active material contained in the negative electrode material layer per unit volume, in $g/cm^3$.

Specifically, the halogen includes F, Cl, Br and I; the unsubstitute hydrocarbon group with 1-5 carbon atom, wherein the hydrocarbon group with 1-5 carbon atoms may be methyl, ethyl, propyl, isobutyl, butyl and pentyl; the halogen-substituted hydrocarbon group with 1-5 carbon atoms has at least one halogen substitution, such as $-CH_2F$ and $-CHFCH_2F$, etc.

After extensive research, the inventors discovered that in a lithium-ion battery with a silicon-based negative electrode, when the compound represented by structural formula 1 is added to the electrolyte as an additive, the unique element sulfur in the additive would be combined with phosphorus-containing molecules in the electrolyte. This results in the formation of a phosphorus-containing inactive material layer on the surface of the negative electrode material layer, which has a moderate thickness and can effectively protect the negative electrode, prevent the electrode material from being further decomposed or damaged, avoid or minimize lithium precipitation from the negative electrode, and lower the rate of expansion and impedance growth during high-temperature storage.

In the non-aqueous electrolyte, the compound represented by structural formula 1 is added, so that the peculiar element sulfur can combine with the phosphorus-containing molecules of the phosphorus-containing compound in the electrolyte, and a phosphorus-containing inactive material layer is formed on the surface of the negative electrode material. Specifically, the phosphorus-containing compound may be a phosphorus-containing compound in lithium salt, such as lithium hexafluorophosphate contained in lithium salt, or a phosphorus-containing compound in additive, such as phosphate ester compound. The percentage mass content (a) of the compound represented by structural formula 1 added in the non-aqueous electrolyte is in the range of 0.1%-1.8%, and the element phosphorus in the phosphorus-containing inactive material layer formed within this range is evenly distributed, which can effectively prevent the electrode material

from being further decomposed or destroyed, and avoid or reduce lithium precipitation at the negative electrode. When the mass content of the compound represented by structural formula 1 is more than 1.8%, the thickness of the phosphorus-containing inactive material layer formed on the surface of the negative electrode material layer would be too thick. This increases the migration distance of lithium-ions, hinders the shuttle of lithium-ions, causes serious polarization of the battery, deteriorates the electrical performance, and puts the battery at danger of lithium precipitation.

If the value of the relation expression of $\frac{a\times S}{W}$ is less than 3.1, the negative electrode of lithium-ion battery is easy to crack and exfoliate during battery cycle. If the value of $\frac{a\times S}{W}$ is more than 60, the lithium-ion battery will be seriously polarized, and its performance will deteriorate, which may lead to the risk of lithium-ion precipitation. When the lithium-ion battery satisfies the relation of $3.1\leq\frac{a\times S}{W}\leq60$, and a phosphorus-containing inactive material layer with a moderate thickness could be formed on the surface of the negative electrode material layer. This prevents further decomposition or damage to the surface electrode material, avoids or reduces lithium precipitation at the negative electrode as much as possible, and reduces the impedance growth rate and expansion rate during high-temperature storage of the battery, thereby effectively improving the high-temperature storage capacity retention rate for the lithium-ion battery. The value of the relation expression for the lithium-ion battery may be 4.0, 8.0, 12.0, 18.0, 24.0, 28.0, 34, 40, 46, 51, 59, 60 and etc, as long as the relation expression of $3.1\leq\frac{a\times S}{W}\leq60$ is satisfied.

In some preferred embodiments, the lithium-ion battery meets the following conditions: $5.5\leq\frac{a\times S}{W}\leq50$

With the definition of the above relation expression, the influences of the percentage mass content (a) of the compound represented by structural formula 1 in the non-aqueous electrolyte, the thickness (S) of the phosphorus-containing inactive material layer formed on the negative electrode material layer surface, and the mass content (W) of the negative electrode active material contained in the negative electrode material layer per unit volume on the battery performance can be further regulated comprehensively. This improves the high-temperature storage performance of the lithium-ion battery.

In specific embodiments, the percentage mass content of the compound represented by the structural formula 1 in the non-aqueous electrolyte can be 0.1%, 0.3%, 0.5%, 0.7%, 0.9%, 1.1%, 1.3%, 1.5%, 1.7% and 1.8% by mass.

In a preferred embodiment, the percentage mass content (a) of the compound represented by structural formula 1 in the non-aqueous electrolyte is 0.1%-1.5%.

The content of the compound represented by structural formula 1 is related to the thickness of the phosphorus-containing inactive material layer formed on the surface of the negative electrode material layer. When the content of the compound represented by structural formula 1 in the non-aqueous electrolyte is within the above range, it is beneficial to form a moderately thick and stable phosphorus-containing inactive material layer on the surface of the negative electrode material layer, which can provide effective protection for the negative electrode, avoid further decomposition or damage of the electrode material, and avoid or minimize lithium precipitation at the negative electrode.

In a specific embodiment, the thickness (S) of the phosphorus-containing inactive material layer formed on the negative electrode material layer surface can be 10 nm, 20 nm, 30 nm, 40 nm, 50 nm, 55 nm, 60 nm, 70 nm, 80 nm, 90 nm, 95 nm, 100 nm, 110 nm, 120 nm, 130 nmor 140 nm.

In a preferred embodiment, the thickness (S) of the phosphorus-containing inactive material layer formed on the negative electrode material layer surface is 30 nm-100 nm.

The formation of a phosphorus-containing inactive material layer with a thickness of 10-140 nm on the surface of the negative electrode material layer can provide effective protection for the negative electrode, avoid further decomposition or damage of the electrode material, avoid or minimize lithium precipitation at the negative electrode, and reduce the impedance growth rate and expansion rate during high-temperature storage of the battery, thus effectively improving the high-temperature storage capacity retention rate of the lithium-ion battery. If the thickness of the phosphorus-containing inactive substance layer is greater than 140 nm, the layer will be thicker, which is not conducive to lithium-ion shuttle and affects capacity improvement; if the thickness of the phosphorus-containing inactive material layer is less than 10 nm, the layer is very thin, which is insufficient to mitigate the expansion phenomenon of the silicon-containing negative electrode and provided protection during charging and discharging, and it cannot protect the battery, resulting in lithium precipitation at the negative electrode. The thickness of the phosphorus-containing inactive material lay formed on the surface of the negative electrode material lay can be adjusted by regulating the content of the compound represented by structural formula 1, the content of the phosphorus-containing compound, and the formation conditions, as long as the thickness of the phosphorus-containing inactive material layer is within the range of 10-140 nm.

In a specific embodiment, the mass content of the negative electrode active material contained in the negative electrode material layer per unit volume can be 1.5 g/$cm^3$, 1.55 g/$cm^3$, 1.6 g/$cm^3$, 1.65 g/$cm^3$, 1.7 g/$cm^3$, 1.75 g/$cm^3$ and 1.8 g/$cm^3$.

In a preferred embodiment, the mass content (W) of the negative electrode active material contained in the negative electrode material layer per unit volume is 1.6-1.8 g/$cm^3$.

With the decrease of the mass content (W) of the negative electrode active material contained in the negative electrode material layer per unit volume, it is beneficial to improve the diffusion efficiency of the non-aqueous electrolyte in the pores of the negative electrode material layer, and then improve its ion conductivity. Meanwhile, the decrease of the mass content (W) of the negative electrode active material contained per unit volume will also lead to the decrease of the battery's energy density, which will affect the stability of the negative electrode material and easily lead to the problem of negative electrode pulverization. However, the greater the mass content (W) of the negative electrode active material contained per unit volume, the more beneficial it is to improve the battery's energy density, but it is not conducive to the infiltration of the non-aqueous electrolyte, and the dynamics of lithium-ion batteries would become worse, which affects the high-temperature performance of lithium-ion batteries. Therefore, when the mass content (W) of the negative electrode active material contained per unit volume falls within the above-mentioned preferred range, the dynamic performance of the battery can be better improved, thus the lithium-ion battery has higher energy density and ion conductivity.

In some preferred embodiments, the compound represented by structural formula 1 is at least one selected from the group consisting of the following compounds 1 to 24:

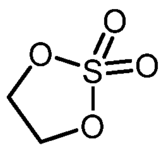
Compound 1

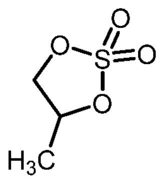
Compound 2

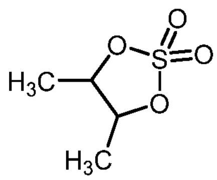
Compound 3

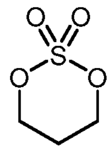
Compound 4

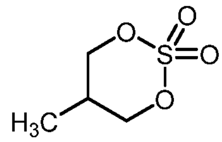
Compound 5

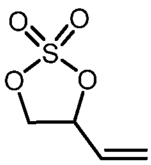
Compound 6

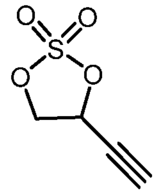
Compound 7

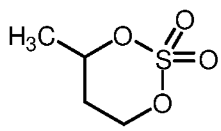
Compound 8

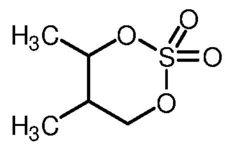
Compound 9

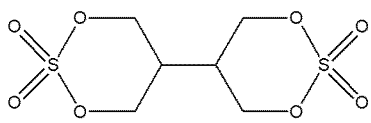
Compound 10

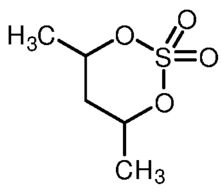
Compound 11

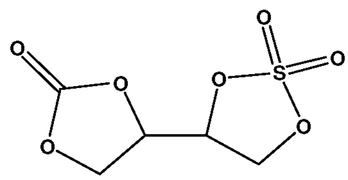
Compound 12

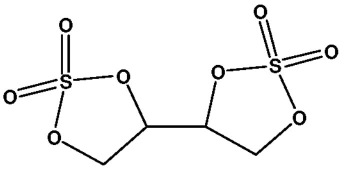

Compound 13

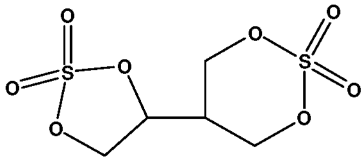

Compound 14

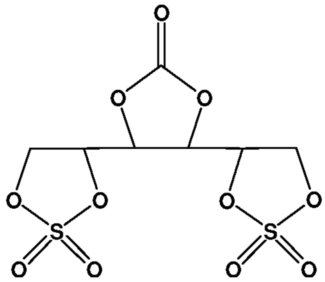

Compound 15

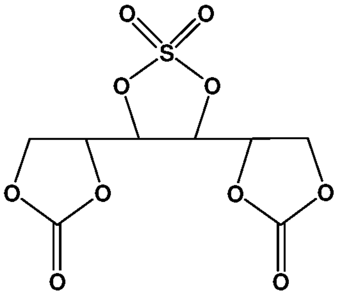

Compound 16

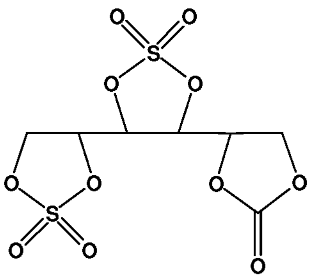

Compound 17

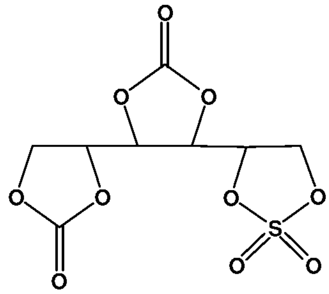

Compound 18

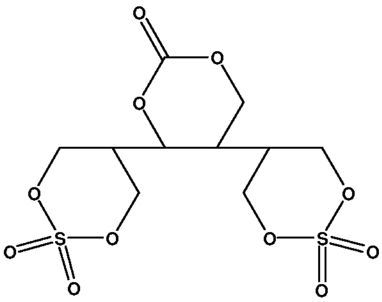

Compound 19

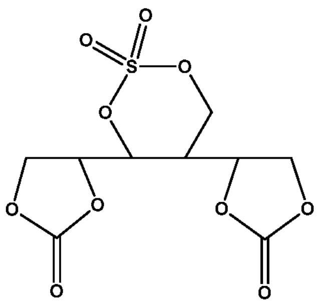

Compound 20

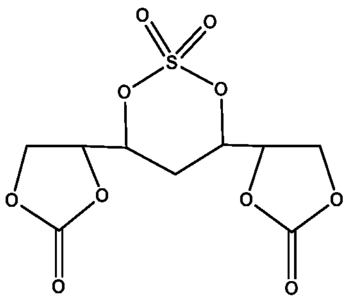

Compound 21

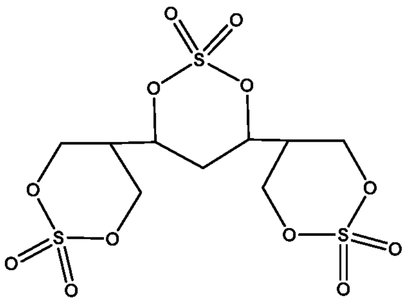

Compound 22

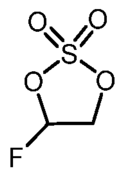

Compound 23

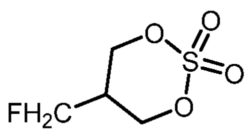

Compound 24.

Compounds 1-24 are part of the examples presented by structural formula 1. It should be noted that as long as the compound satisfies the structural formula 1 and achieves the following effects, it shall be included in the protection scope of the invention. The effect is that it enables its combination with phosphorus-containing molecules in phosphorus-containing compounds such as lithium hexafluorophosphate in electrolyte, allowing the formation of a phosphorus-containing inactive material layer on the surface of the negative electrode material, which protects the electrode material. This avoides further decomposition or damage to the electrode material, prevents lithium precipitation at the negative electrode, reduces the impedance growth rate and expansion rate of battery during high-temperature storage, and improves the high-temperature storage performance of the battery.

In a preferred embodiment, the lithium salt further includes a supplemental lithium salt, and the supplemental lithium salt includes $LiPO_2F_2$, $LiBF_4$, LiBOB, $LiSbF_6$, $LiAsF_6$, $LiCF_3SO_3$, LiDFOB, $LiN(SO_2CF_3)_2$, $LiC(SO_2CF_3)_3$, $LiN(SO_2C_2F_5)_2$, $LiN(SO_2F)_2$, LiCl, LiBr, LiI, $LiClO_4$, $LiB_{10}Cl_{10}$, $LiAlCl_4$, lithium chloroborane, lithium lower aliphatic carboxylate with less than 4 carbon atoms, lithium tetraphenylborate and lithium imide.

The concentration of $LiPF_6$ is 0.8 mol/L-1.5 mol/L, and the concentration of the supplemental lithium salt is 0.01 mol/L-0.3 mol/L.

$LiPF_6$ in the lithium salt, as the main lithium salt, participates in the formation of the phosphorus-containing inactive material layer on the surface of the negative electrode material layer together with the compound represented by structural formula 1, where the concentration of $LiPF_6$ affects the thickness of the phosphorus-containing inactive material layer. The concentration of lithium hexafluorophosphate added in this embodiment is 0.8 mol/L-1.5 mol/L. In this range, sufficient phosphorus molecules can be provided for the formation of phosphorus-containing inactive material layer, and element phosphorus in this layer are uniformly and completely distributed in the phosphorus-containing inactive material layer, which can provide effective protection for the battery, avoid lithium precipitation at the negative electrode, reduce the impedance growth rate and expansion rate of the battery during high-temperature storage, thereby enhancing the high-temperature storage capacity retention rate of the battery. If the concentration of lithium hexafluorophosphate is less than 0.8mol/L, the molecular weight of phosphorus in the electrolyte would be insufficient, and the distribution of phosphorus-containing elements in the phosphorus-containing inactive material layer would be uneven, which affects the formation and thickness of the phosphorus-containing inactive material layer, and it is impossible to avoid the decomposition or destruction of electrode materials, resulting in serious lithium precipitation at the negative electrode. If the concentration of lithium hexafluorophosphate is greater than 1.5 mol/L, the viscosity of the electrolyte would increase, the conductivity would decrease, the lithium-ion migration rate would decrease, the battery's concentration polarization would increase, and the battery impedance would increase. The concentration of lithium hexafluorophosphate can be 0.8 mol/L, 0.9 mol/L, 1.0 mol/L, 1.1 mol/L, 1.2 mol/L, 1.3 mol/L, 1.4 mol/L and 1.5 mol/L. The concentration of lithium hexafluorophosphate can be appropriately adjusted according to the required thickness of the phosphorus-containing inactive material layer, as long as the concentration of lithium hexafluorophosphate is within the range of 0.8 mol/L-1.5 mol/L.

In some embodiments, the additive further includes a supplemental additive, and the supplemental additive includes at least one of sultone compounds, cyclic carbonate compounds, phosphate compounds, borate compounds and nitrile compounds. The addition amount of the supplemental additive is 0.01%-30% based on the total mass of the non-aqueous electrolyte being 100%.

It should be noted that, unless otherwise specified, in general, the content of any optional substance for the supplemental additive in the non-aqueous electrolyte is less than 10%, preferably 0.1-5%, and more preferably 0.1%-2%. Specifically, the content of any optional substance fro the supplemental additive may be 0.05%, 0.08%, 0.1%, 0.5%, 0.8%, 1%, 1.2%, 1.5%, 1.8%, 2%, 2.2%, 2.5%, 2.8%, 3%, 3.2%, 3.5%, 3.8%, 4%, 4.5%, 5%, 5.5%, 6%, 6.5%, 7%, 7.5%, 7.8%, 8%, 8.5%, 9%, 9.5% and 10%.

In some embodiments, when the supplemental additive is selected from fluoroethylene carbonate, the content of the fluoroethylene carbonate is 0.05%-30% based on the total mass of the non-aqueous electrolyte being 100%.

The supplemental additive cooperates with the compound represented by structural formula 1 to form a phosphorus-containing inactive material layer on the surface of the negative electrode material layer. When the content of supplemental additives is too low, the thickness of the formed phosphorus-containing inactive material layer is reduced, which is not enough to protect the electrode material, and the electrode material would be further destroyed or decomposed, and lithium precipitation would occur at the negative electrode. When the content of supplemental additives is too high, the viscosity of the electrolyte would increase, the thickness of the phosphorus-containing inactive material layer would be too thick, the battery polarization is serious, the performance is deteriorated, and the battery is at risk of lithium-ion precipitation.

In a preferred embodiment, the sultone compound is at least one selected from the group consisting of methyl methanedisulfonate,1,3-propane sultone, 1,4-butane sultone and 1,3-propylene sultone;

the cyclic carbonate compound is at least one selected from the group consisting of vinylene carbonate, vinylethylene carbonate, fluoroethylene carbonate or a compound represented by structural formula 2;

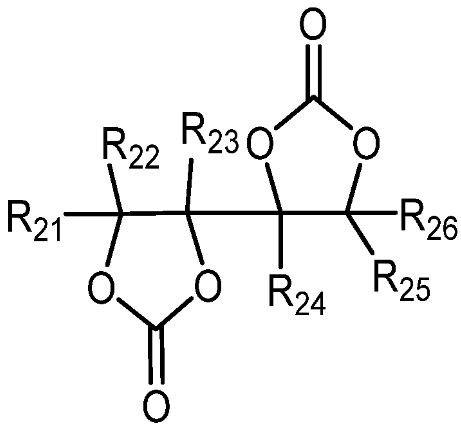

Structural formula 2

in structural formula 2, $R_{21}$, $R_{22}$, $R_{23}$, $R_{24}$, $R_{25}$ and $R_{26}$ are independently selected from one of a hydrogen atom, a halogen atom and a C1-C5 group;

the phosphate compound is at least one selected from the group consisting of tri (trimethylsilane) phosphate, tri (trimethylsilane) phosphite or a compound represented by structural formula 3:

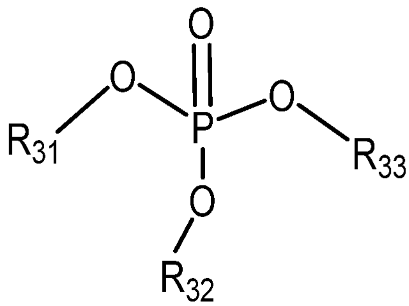

Structural formula 3

in structural formula 3, $R_{31}$, $R_{32}$ and $R_{33}$ are independently selected from a C1-C5 saturated hydrocarbon group, a C1-C5 unsaturated hydrocarbon group, a C1-C5 halogenated hydrocarbon group and $-Si(C_mH_{2m+1})_3$, m is a natural number of 1-3, and at least one of $R_{31}$, $R_{32}$ and $R_{33}$ is an unsaturated hydrocarbon group; and

the borate compound is at least one selected from the group consisting of tris (trimethylsilane) borate and tris (triethyl silicane) borate.

In a preferred embodiment, the compound represented by structural formula 2 includes the following compounds:

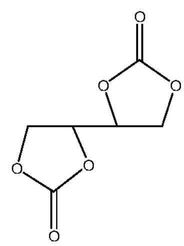 , 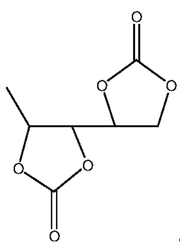 , 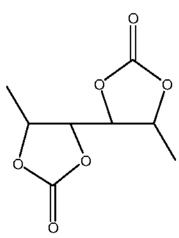 , 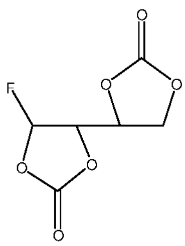 , 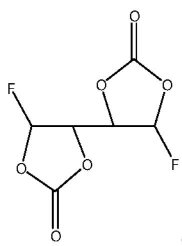 , 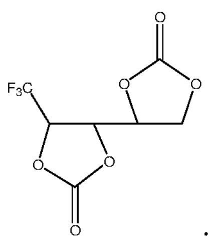 .

In a preferred embodiment, the phosphate compound represented by structural formula 3 may be at least one selected from the group consisting of tris (trimethylsilane) phosphate, phosphoric acid tripropargyl ester, dipropargyl methyl phosphonate, dipropargyl ethyl phosphate, dipropargyl propyl phosphate,dipropargyl trifluoromethyl phosphate, dipropargyl-2, 2, 2-trifluoroethyl phosphate, dipropargyl-3, 3, 3-trifluoropropyl phosphate, dipropargyl hexafluoroisopropyl phosphate, phosphoric acid triallyl ester, diallyl methyl phosphate, diallyl ethyl phosphate, diallyl propyl phosphate, diallyl trifluoromethyl phosphate, diallyl-2 , 2 , 2-trifluoroethyl phosphate, diallyl-3, 3, 3-trifluoropropyl phosphate or diallyl

hexafluoroisopropyl phosphate

The compound represented by structural formula 1 can also be combined with phosphorus molecules in phosphate compound in the electrolyte to form a phosphorus-containing inactive material layer on the surface of the negative electrode material layer, and the thickness of the formed phosphorus-containing inactive material layer can be adjusted according to the addition amount of the compound represented by structural formula 1 and the addition amount of unsaturated phosphate compound in the electrolyte. In this way, the formed phosphorus-containing inactive material layer with the thickness of 10 nm-140 nm can provide effective protection for the battery. The electrode material is prevented from being further decomposed or destroyed, and lithium precipitation at the negative electrode is avoided or reduced as much as possible, so that the impedance growth rate and expansion rate of the battery during high-temperature storage are reduced, thereby effectively improving the high-temperature storage capacity retention rate of the lithium-ion battery.

The nitrile compound is at least one selected from the group consisting of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

In other embodiments, the supplemental additive may also include other additives that can improve the performance of the battery. For example, additives that can improve the safety performance of the battery, flame retardant additives such as fluorophosphate and cyclophosphazene, or overcharge prevention additives such as tert-amylbenzene and tert-butyl benzene.

In some embodiments, the non-aqueous organic solvent includes at least one of ether solvent, nitrile solvent, carbonate solvent and carboxylic ester solvent.

In some embodiments, the ether solvent includes cyclic ether or chain ether, preferably chain ether with 3-10 carbon atoms and cyclic ether with 3-6 carbon atoms, and the specific cyclic ether may be but are not limited to 1,3-dioxolane (DOL), 1,4-dioxooxane (DX), crown ether, tetrahydrofuran (THF), 2-methyltetrahydrofuran (2-$CH_3$-THF) and 2-trifluoromethyltetrahydrofuran (2-$CF_3$-THF). Specifically, the chain ether may be but not limited to dimethoxymethane, diethoxymethane, ethoxymethoxymethane, ethylene glycol di-n-propyl ether, ethylene glycol di-n-butyl ether and diethylene glycol dimethyl ether. Dimethoxymethane, diethoxymethane and ethoxymethoxymethane with low viscosity and high ionic conductivity are particularly preferred because the solvability of chain ether and lithium-ions is high and the ion dissociation can be improved. Ether compounds may be used alone or in any combinations and ratios of two or more kinds. The addition amount of ether compound is not particularly limited, which is within the range of not significantly damaging the effect of the high-voltage lithium-ion battery of the present application. In the non-aqueous solvent volume ratio of 100%, the volume ratio is usually 1% or more, preferably 2% or more, more preferably 3% or more. Moreover, the volume ratio is usually 30% or less, preferably 25% or less, and more preferably 20% or less. When two or more ether compounds are used in combination, the total amount of ether compounds only needs to be in the above range. When the addition amount of ether compounds is within the above preferred range, it is easy to ensure the improvement effects of ionic conductivity brought by the increase of lithium-ion dissociation degree and the decrease of viscosity of chain ether. In addition, when the negative electrode active material is a carbon material, the co-intercalation reaction of the chain ether and lithium-ions can be suppressed, so that the input-output characteristics and the charge-discharge rate characteristics can be within an appropriate range.

In some embodiments, the nitrile solvent may be, but is not limited to, one or more of acetonitrile, glutaronitrile and malononitrile.

In some embodiments, the carbonate solvent includes a cyclic carbonate or a chain carbonate. The cyclic carbonate may be but not limited to one or more of ethylene carbonate (EC), propene carbonate (PC), γ-butyrolactone (GBL) and butylene carbonate (BC). The chain carbonate may be but not limited to one or more of dimethyl carbonate (DMC), ethyl methyl carbonate (EMC), diethyl carbonate (DEC) and dipropyl carbonate (DPC). The content of cyclic carbonate is not particularly limited, which is within the range of not significantly damaging the effect of the high-voltage lithium-ion battery of the present application. However, in the case where one is used alone, the minimal content is usually 3% by volume or more, preferably 5% by volume or more, relative to the total amount of the solvent in the non-aqueous electrolyte. With this range, the decrease of conductivity caused by the decrease of the dielectric constant of the non-aqueous electrolyte can be avoided, so the high-current discharge characteristics, the stability with respect to the negative electrode and the cycle characteristics of the non-aqueous electrolyte battery can easily reach a good range. In addition, the maximum content is usually 90% or less by volume, preferably 85% or less by volume, and more preferably 80% or less by volume. With this range, the oxidation/reduction resistance of the non-aqueous electrolyte can be improved, thus contributing to the improvement of the stability during high-temperature storage. The content of the chain carbonate is not particularly limited, but it is usually 15% or more by volume, preferably 20% or more by volume, and more preferably 25% or more by volume, relative to the total amount of the solvent in the non-aqueous electrolyte. In addition, the volume ratio is usually 90% or less, preferably 85% or less, and more preferably 80% or less. By setting the content of the chain carbonate in the above range, the viscosity of the non-aqueous electrolyte can be easily kept with an appropriate range, and the decrease of ionic conductivity can be suppressed, thus contributing to a good range of the output characteristics of the non-aqueous electrolyte battery. When two or more kinds of chain carbonates are used in combination, the total amount of the

chain carbonate only needs to be in the above range.

In some embodiments, it is also preferable to use chain carbonates with fluorine atoms (hereinafter referred to as "fluorinated chain carbonates"). The number of fluorine atoms in the fluorinated chain carbonate is not particularly limited as long as it is 1 or more, but it is usually 6 or less, preferably 4 or less. When the fluorinated chain carbonate has multiple fluorine atoms, these fluorine atoms can be bonded to the same carbon or to different carbons. Examples of the fluorinated chain carbonates include fluorinated dimethyl carbonate derivatives, fluorinated ethyl methyl carbonate derivatives and fluorinated diethyl carbonate derivatives.

Carboxylic acid solvent includes cyclic carboxylic ester and/or chain carbonic ester. Examples of cyclic carboxylic ester include one or more of γ-butyrolactone, γ-valerolactone and δ-valerolactone. Examples of chain carbonic ester include one or more of methyl acetate (MA), ethyl acetate (EA), n-propyl acetate (EP), butyl acetate, propyl propionate (PP) and butyl propionate.

In some embodiments, sulfone solvent includes cyclic sulfones and chain sulfones, but preferably, in the case of cyclic sulfones, it is usually a compound with 3-6 carbon atoms, preferably 3-5 carbon atoms; and in the case of chain sulfones, it is usually a compound with 2-6 carbon atoms, preferably 2-5 carbon atoms. The addition amount of the sulfone solvent is not particularly limited, which is within the range of not significantly damaging the effect of the lithium-ion battery of the present application. Compared with the total amount of solvent in non-aqueous electrolyte, the volume ratio is usually 0.3% or more, preferably 0.5% or more, more preferably 1% or more. Moreover, the volume ratio is usually 40% or less, preferably 35% or less, and more preferably 30% or less. When two or more kinds of sulfone solvent are used in combination, the total amount of the sulfone solvents only needs to meet the above range. When the addition amount of sulfone solvent is within the above range, the non-aqueou electrolyte with excellent high-temperature storage stability is easily to be obtained.

In a preferred embodiment, the non-aqueou solvent is a mixture of cyclic carbonic ester and chain carbonic ester.

In some embodiments, the positive electrode further comprises a positive electrode current collector, and the positive electrode material layer covers the surface of the positive electrode current collector.

In some embodiments, the positive electrode current collector is selected from metal materials that can conduct electrons. Preferably, the positive electrode current collector includes one or more of Al, Ni, tin, copper and stainless steel. In a more preferred embodiment, the positive electrode current collector is selected from aluminum foil.

In some embodiments, the positive electrode material layer further comprises a positive electrode binder and a positive electrode conductive agent. And the positive electrode active material, the positive electrode binder and the positive electrode conductive agent are mixed to obtain the positive electrode material layer.

The positive electrode material layer comprises a positive electrode active material, and the positive electrode active material comprises at least one compound represented by formula (1):

$$Li_{1+x'}Ni_{a'}Co_bM'_{1-a'-b}O_{2-y}D_y \qquad \text{Formula (1)}$$

in formula (1), $-0.1 \le x' \le 0.2$, $0 < a' < 1$, $0 \le b < 1$, $0 < a'+b < 1$, and $0 \le y < 0.2$, M' includes one or both of Mn and Al, and zero or at least one of Sr, Mg, Ti, Ca, Zr, Zn, Si, Cu, V, Fe or Ce, and D includes at least one of S, N, F, Cl, Br and I.

In some preferred embodiments, the positive electrode active material includes $LiNi_mCo_{y'}Mn_zL_{(1-m-y'-z)}O_2$, where L is Al, Sr, Mg, Ti, Ca, Zr, Zn, Si, Cu, V or Fe, and $0 \le m \le 1$, $0 \le y' \le 1$, $0 \le z \le 1$, and $0 \le m+y'+z \le 1$.

The positive electrode binder includes one or more of polyvinylidene fluoride, vinylidene fluoride copolymer, polytetrafluoroethylene, vinylidene fluoride-hexafluoropropylene copolymer, tetrafluoroethylene-hexafluoropropylene copolymer, tetrafluoroethylene-perfluoroalkyl vinyl ether copolymer, ethylene-tetrafluoroethylene copolymer, vinylidene fluoride-tetrafluoroethylene copolymer, vinylidene fluoride-trifluoroethylene copolymer, vinylidene fluoride-trichloroethylene copolymer, vinylidene fluoride-fluoroethylene copolymer, vinylidene fluoride-hexafluoropropylene-tetrafluoroethylene copolymer, thermoplastic polyimide, polyethylene, polypropylene or other thermoplastic resins; and styrene butadiene rubber.

The positive electrode conductive agent includes at least one of conductive carbon black, conductive carbon balls, conductive graphite, conductive carbon fibers, carbon nanotubes, graphene or reduced graphene oxide

In some embodiments, the silicon-based material is selected from simple silicon or a composite material formed by compounding a silicon compound with graphite, and the simple silicon includes at least one of nano-silicon particles, silicon nanotubes, silicon nanowires, micro-silicon particles and silicon films; the silicon compound includes at least one of $SiO_x$ or silicate compound, where $0 < x \le 2$.

The silicon compound $SiO_x$ may be silicon oxide or silicon monoxide; the silicate includes lithium silicate.

In some embodiments, the negative electrode further comprises a negative electrode current collector, and the negative electrode material layer covers the surface of the negative electrode current collector. The material of the negative electrode current collector can be the same as that of the positive electrode current collector, which is not described here. In a more preferred embodiment, the negative electrode current collector is selected from copper foil.

In some embodiments, the negative electrode material layer further includes a negative electrode binder and a

negative electrode conductive agent. The negative electrode active material, the negative electrode binder and the negative electrode conductive agent are blended to obtain the negative electrode material layer. The possible ranges of the negative electrode binder and the negative electrode conductive agent are the same as those of the positive electrode binder and the positive electrode conductive agent respectively, and the details are not repeated here.

In some embodiments, the lithium-ion battery also includes a separator, which is positioned between the positive electrode and the negative electrode.

The separator is an existing conventional diaphragm, which may be a ceramic diaphragm, a polymer diaphragm, a nonwoven fabric, an inorganic-organic composite diaphragm, etc., including but not limited to single-layer PP (polypropylene), single-layer PE (polyethylene), double-layer PP/PE, double-layer PP/PP, triple-layer PP/PE/PP and other diaphragm.

The present application will be further illustrated with embodiments and examples.

The compounds mentioned in the following embodiments and Comparative examples are shown in Table 1, as below.

Table 1

| Compound 1 | Compound 6 | Compound 10 |
| --- | --- | --- |
| 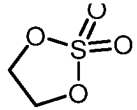 | 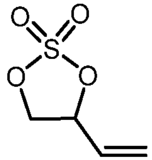 | 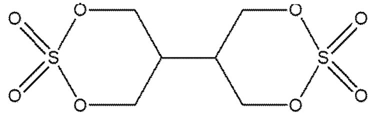 |
| Compound 12 | Compound 15 | Compound 23 |
| 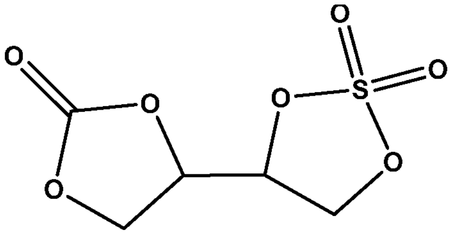 | 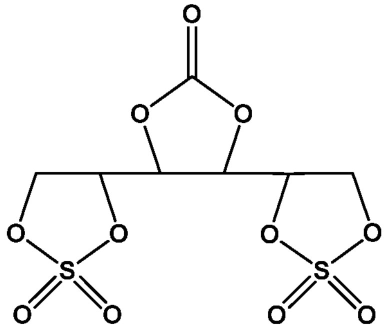 | 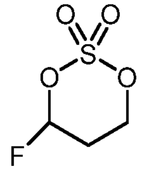 |

Table 2 Parameter Design of Embodiments and Comparative examples

| Group | Compounds represented by structural formula 1 | Percentage mass content (a) of the compound represented by structural formula /% | Mass content (W) of the negative electrode active material contained in the negative electrode material layer per unit volume W/g/cm$^3$ | Thickness (S) of the phosphorus-containing inactive material layer formed on the negative electrode material layer surface /nm | Supplemental additive and its content /% | $\frac{a \times S}{W}$ |
|---|---|---|---|---|---|---|
| Embodiment 1 | Compound 1 | 0.5 | 1.5 | 70 | / | 23.3 |
| Embodiment 2 | Compound 1 | 1.8 | 1.5 | 50 | / | 60.0 |
| Embodiment 3 | Compound 1 | 1.0 | 1.6 | 50 | / | 31.3 |
| Embodiment 4 | Compound 1 | 0.5 | 1.6 | 70 | / | 21.9 |
| Embodiment 5 | Compound 1 | 0.5 | 1.8 | 70 | / | 19.4 |
| Embodiment 6 | Compound 1 | 0.8 | 1.8 | 110 | / | 48.9 |
| Embodiment 7 | Compound 1 | 1.5 | 1.6 | 54 | / | 50.6 |
| Embodiment 8 | Compound 1 | 0.5 | 1.6 | 10 | / | 3.1 |
| Embodiment 9 | Compound 1 | 0.7 | 1.8 | 140 | / | 54.4 |
| Embodiment 10 | Compound 1 | 0.5 | 1.6 | 65 | / | 20.3 |
| Embodiment 11 | Compound 1 | 1.0 | 1.6 | 80 | / | 50.0 |
| Embodiment 12 | Compound 1 | 0.5 | 1.6 | 90 | / | 28.1 |
| Embodiment 13 | Compound 1 | 0.8 | 1.6 | 80 | / | 40.0 |
| Embodiment 14 | Compound 1 | 0.3 | 1.6 | 60 | / | 11.3 |
| Embodiment 15 | Compound 1 | 0.5 | 1.6 | 100 | / | 31.3 |
| Embodiment 16 | Compound 1 | 0.5 | 1.6 | 40 | / | 12.5 |
| Embodiment 17 | Compound 1 | 0.8 | 1.6 | 55 | / | 27.5 |
| Embodiment 18 | Compound 1 | 0.5 | 1.6 | 60 | / | 18.8 |
| Embodiment 19 | Compound 1 | 1.1 | 1.7 | 75 | / | 48.5 |

(continued)

| Group | Compounds represented by structural formula 1 | Percentage mass content (a) of the compound represented by structural formula /% | Mass content (W) of the negative electrode active material contained in the negative electrode material layer per unit volume W/g/cm$^3$ | Thickness (S) of the phosphorus-containing inactive material layer formed on the negative electrode material layer surface /nm | Supplemental additive and its content /% | $\frac{a \times S}{W}$ |
|---|---|---|---|---|---|---|
| Embodiment 20 | Compound 1 | 0.5 | 1.7 | 30 | / | 8.8 |
| Embodiment 21 | Compound 1 | 0.7 | 1.7 | 83 | / | 34.2 |
| Embodiment 22 | Compound 1 | 0.4 | 1.7 | 50 | / | 11.8 |
| Embodiment 23 | Compound 1 | 0.9 | 1.7 | 70 | / | 37.1 |
| Embodiment 24 | Compound 1 | 0.1 | 1.55 | 48 | / | 3.1 |
| Embodiment 25 | Compound 6 | 1.0 | 1.6 | 50 | / | 31.3 |
| Embodiment 26 | Compound 10 | 1.0 | 1.6 | 50 | / | 31.3 |
| Embodiment 27 | Compound 12 | 1.0 | 1.6 | 50 | / | 31.3 |
| Embodiment 28 | Compound 15 | 1.0 | 1.6 | 50 | / | 31.3 |
| Embodiment 29 | Compound 23 | 1.0 | 1.6 | 50 | / | 31.3 |
| Embodiment 30 | Compound 1 | 1.0 | 1.6 | 50 | VC: 1 | 31.3 |
| Embodiment 31 | Compound 1 | 1.0 | 1.6 | 50 | FEC: 1 | 31.3 |
| Embodiment 32 | Compound 1 | 1.0 | 1.6 | 50 | TMSB: 1 | 31.3 |
| Embodiment 33 | Compound 1 | 1.0 | 1.6 | 50 | TMSP: 1 | 31.3 |
| Comparative example 1 | / | / | 1.5 | 24 | / | / |
| Comparative example 2 | / | / | 1.6 | 40 | / | / |
| Comparative example 3 | / | / | 1.7 | 42 | / | / |
| Comparative example 4 | / | / | 1.8 | 33 | / | / |
| Comparative example 5 | Compound 1 | 1.9 | 1.5 | 45 | / | 57.0 |

(continued)

| Group | Compounds represented by structural formula 1 | Percentage mass content (a) of the compound represented by structural formula /% | Mass content (W) of the negative electrode active material contained in the negative electrode material layer per unit volume W/g/cm$^3$ | Thickness (S) of the phosphorus-containing inactive material layer formed on the negative electrode material layer surface /nm | Supplemental additive and its content /% | $\frac{a \times S}{W}$ |
|---|---|---|---|---|---|---|
| Comparative example 6 | Compound 1 | 2.0 | 1.7 | 50 | / | 58.8 |
| Comparative example 7 | Compound 1 | 0.3 | 1.8 | 15 | / | 2.5 |
| Comparative example 8 | Compound 1 | 0.8 | 1.8 | 150 | / | 66.7 |
| Comparative example 9 | Compound 1 | 1.5 | 1.9 | 60 | / | 47.4 |
| Comparative example 10 | Compound 1 | 1.0 | 1.4 | 30 | / | 21.4 |
| Comparative example 11 | Compound 1 | 1.5 | 1.6 | 70 | / | 65.6 |
| Comparative example 12 | Compound 1 | 1.0 | 1.5 | 110 | / | 73.3 |
| Comparative example 13 | Compound 1 | 0.05 | 1.5 | 10 | / | 0.3 |
| Comparative example 14 | / | / | 1.6 | 70 | VC: 1 | / |

Embodiments

Specifically, the present application discloses a lithium-ion battery and a preparation method thereof. The method comprises the following steps.

**Preparation of positive electrode plate**

The positive electrode active materials of $LiNi_{0.8}Co_{0.1}Mn_{0.2}O_2$, conductive carbon black (Super-P) and binder polyvinylidene fluoride (PVDF) were mixed in the mass ratio of 97:1.5:1.5, then they were dispersed in N-methyl-2-pyrrolidone (NMP) to obtain a positive electrode slurry. The slurry was evenly coated on both sides of aluminum foil, dried, calendered and vacuum-dried to obtain a positive electrode material layer. A positive electrode plate was obtained by welding aluminum lead wires with an ultrasonic welder. The thickness of the positive electrode plate is 120 μm-150 μm.

**Preparation of negative electrode plate**

The negative electrode active materials of SiO-C, conductive carbon black Super-P, binder styrene-butadiene rubber (SBR) and carboxymethyl cellulose (CMC) were mixed according to the mass ratio of 94:1.5:3:1.5, then they were dispersed in deionized water to obtain a negative electrode slurry. The slurry was evenly coated on both sides of copper foil, dried, calendered and vacuum-dried. A negative electrode plate was obtained by welding nickel lead wires with an ultrasonic welder, with a thickness of 120-150 μm. The mass content of the negative electrode active material contained in the negative electrode material layer per unit volume is regulated by adjusting the surface density and rolling pressure of the negative active material. The mass contents (W) of negative electrode active material contained in unit volume of negative electrode material layer are different among Embodiments 1-33 and Comparative examples 1-13, as shown in

Table 2.

**Preparation of non-aqueous electrolyte**

Ethylene carbonate, fluoroethylene carbonate, diethyl carbonate and ethyl methyl carbonate were mixed according to the volume ratio of EC:FEC:DEC:EMC =20:10:30:40, and then the lithium salt $LiPF_6$, and additive of the compound represented by structural formula 1 were added, and even other supplemental additives may be added. The addition amounts of lithium salt $LiPF_6$ and the compound represented by structural formula 1 are different among Embodiments 1-33 and Comparative examples 1-13.

**Battery assembly**

A three-layered isolation film of polypropylene, polyethylene and polypropylene with a thickness of 20 μm was placed between the positive plate and the negative plate. The sandwich structure consisting of the positive plate, negative plate and separator was wound, and then the wound body was put into an aluminum foil packaging bag and baked in vacuum at 75°C for 48h to obtain a battery core to be injected with liquid.

**Liquid injection and formation of battery**

The prepared electrolyte was injected into the battery core in a glove box with water and oxygen contents below 20 ppm and 50 ppm, respectively. Then it was vacuum-packaged and let stand at 45°C for 24 hours. Then, formation of the first charge was performed according to the following steps: charging at 0.05C constant current for 180min, charging at 0.1C constant current for 180min, then charging at 0.2C constant current for 120min, after aging at 45°C for 48h, sealing in vaccum condition for the second time, then further charging at 0.2C constant current to 4.2V, and discharging at 0.2C constant current to 2.75V.

On the basis of adding lithium salt $LiPF_6$ and the compound represented by structural formula 1 as an additive in the non-aqueous electrolyte according to a specified ratio, a phosphorus-containing inactive material layer with a specified thickness was formed on the surface of the negative electrode material layer by adjusting the adopted current, formation temperature or formation time in the battery formation process.

Method for measuring thickness of the formed phosphorus-containing inactive material layer.

The $Ar^+$ ion beam of XPS instrument was adopted for ion etching from the surface of electrode material to the inner layer, the etching power was controlled at 1kV, and the etching beam spot was 3*3 μm. By measuring the signal intensity of etched components, controlling the ion etching time to be 1 min and the etching times to be 10 times, and calculating the relationship between etching time and layer thickness, the thickness of phosphorus-containing inactive material layer formed on the electrode surface was analyzed.

**Electrical performance test**

(1) Test of 60-day storage at high temperature of 60°C

At room temperature, the formed battery was first charged to 4.2V at 1C constant current, then charged to 0.05C at constant current and constant voltage, and then discharged to 3.0V at 1C current, and the initial discharge capacity $C_0$, initial battery volume $V_0$ and initial internal resistance $R_0$ of the battery were measured. After being fully charged and stored at 60°C for 60 days, it was discharged to 3V at 1C, and the discharge capacity $C_1$, battery volume $V_1$ and internal resistance $R_2$ of the battery were measured. The calculation formulae are as follows.

$$\text{Gas expansion rate (\%)} = (V_1\text{-}V_0)/\ V_0\times 100\%;$$

$$\text{Impedance growth rate (\%)} = (R_1\text{-}R_0)/\ R_0\times 100\%;$$

$$\text{Capacity retention rate (\%)}=(C_1/C_0)\times 100\%.$$

(2) Electrical performance test of lithium precipitation at negative electrode

The fully charged battery was disassembled in a glove box filled with Ar gas. The disassembled negative electrode plate was sampled in the area of 1 cm×1 cm in the center of the electrode plate, and transferred to an SEM

vacuum chamber in a sealed container for interface observation. By observing whether lithium dendrites were formed at the interface of electrode materials under a scanning electron microscope, it was determined whether lithium was precipitated.

(1) Test results obtained from Embodiments 1 to 33 and Comparative examples 1 to 13 are shown in Table 3.

Table 3

| Group | Initial impedance of battery /mΩ | Storage at 60°C for 60 days | | | |
|---|---|---|---|---|---|
| | | Capacity retention rate /% | Impedance growth rate /% | Expansion rate /% | Whether lithium precipitated at the negative electrode |
| Embodiment 1 | 35.0 | 83.6 | 36.9 | 16.4 | No lithium precipitation |
| Embodiment 2 | 42.3 | 81.6 | 34.9 | 13.8 | Minor lithium precipitation |
| Embodiment 3 | 38.0 | 85.1 | 40.2 | 15.8 | No lithium precipitation |
| Embodiment 4 | 35.0 | 86.9 | 56.2 | 17.4 | No lithium precipitation |
| Embodiment 5 | 33.0 | 82.0 | 44.3 | 15.6 | No lithium precipitation |
| Embodiment 6 | 39.0 | 82.4 | 33.9 | 14.7 | No lithium precipitation |
| Embodiment 7 | 42.3 | 82.6 | 30.7 | 16.1 | No lithium precipitation |
| Embodiment 8 | 24.1 | 78.4 | 40.1 | 16.9 | No lithium precipitation |
| Embodiment 9 | 45.2 | 81.9 | 33.4 | 14.1 | Minor lithium precipitation |
| Embodiment 10 | 33.0 | 86.4 | 36.9 | 13.1 | No lithium precipitation |
| Embodiment 11 | 39.0 | 82.7 | 33.4 | 11.2 | No lithium precipitation |
| Embodiment 12 | 31.0 | 83.5 | 38.1 | 16.8 | No lithium precipitation |
| Embodiment 13 | 36.0 | 83.0 | 34.2 | 15.1 | No lithium precipitation |
| Embodiment 14 | 37.0 | 82.6 | 29.4 | 14.9 | No lithium precipitation |
| Embodiment 15 | 41.0 | 81.1 | 26.8 | 15.7 | No lithium precipitation |
| Embodiment 16 | 39.0 | 83.9 | 42.1 | 20.6 | No lithium precipitation |
| Embodiment 17 | 42.0 | 84.6 | 40.8 | 21.7 | No lithium precipitation |
| Embodiment 18 | 33.0 | 79.4 | 30.8 | 10.6 | No lithium precipitation |
| Embodiment 19 | 37.0 | 80.6 | 26.9 | 11.7 | No lithium precipitation |
| Embodiment 20 | 38.0 | 82.9 | 40.8 | 16.7 | No lithium precipitation |
| Embodiment 21 | 39.0 | 84.5 | 37.5 | 18.1 | No lithium precipitation |
| Embodiment 22 | 41.0 | 80.4 | 35.9 | 22.1 | No lithium precipitation |
| Embodiment 23 | 43.0 | 82.3 | 34.1 | 18.4 | No lithium precipitation |
| Embodiment 24 | 32.00 | 80.7 | 42.3 | 17.9 | No lithium precipitation |
| Comparative example 1 | 24.6 | 62.1 | 62.4 | 35.8 | Moderate lithium precipitation |
| Comparative example 2 | 28.9 | 59.4 | 64.8 | 52.1 | Moderate lithium precipitation |
| Comparative example 3 | 27.1 | 58.2 | 70.2 | 46.8 | Moderate lithium precipitation |
| Comparative example 4 | 26.9 | 60.7 | 68.1 | 48.5 | Moderate lithium precipitation |
| Comparative example 5 | 69.2 | 76.3 | 42.6 | 20.9 | Minor lithium precipitation |

(continued)

| Group | Initial impedance of battery /mΩ | Storage at 60°C for 60 days | | | |
|---|---|---|---|---|---|
| | | Capacity retention rate /% | Impedance growth rate /% | Expansion rate /% | Whether lithium precipitated at the negative electrode |
| Comparative example 6 | 73.4 | 75.4 | 48.1 | 19.7 | Minor lithium precipitation |
| Comparative example 7 | 32.1 | 62.8 | 56.9 | 48.5 | Moderate lithium precipitation |
| Comparative example 8 | 65.8 | 72.6 | 35.7 | 46.8 | Minor lithium precipitation |
| Comparative example 9 | 46.1 | 62.1 | 38.1 | 33.1 | Moderate lithium precipitation |
| Comparative example 10 | 30.8 | 74.9 | 48.0 | 25.4 | Minor lithium precipitation |
| Comparative example 11 | 60.8 | 62.8 | 44.8 | 34.8 | Moderate lithium precipitation |
| Comparative example 12 | 62.5 | 72.6 | 62.1 | 24.9 | Severe lithium precipitation |
| Comparative example 13 | 25.4 | 66.8 | 52.1 | 50.4 | Minor lithium precipitation |

Through that comparison between Embodiments 1-24 and Comparative examples 1-4, it can be known that even though the compound represented by structural formula 1 is not added into the electrolyte of Comparative examples 1-4, a phosphorus-containing inactive material layer with a thickness of 10-140 nm can be formed on the surface of the negative electrode, lithium is moderately precipitated on the surface of the negative electrode, the impedance growth rate and expansion rate of the battery are high, and the high-temperature storage capacity retention rate is poor. It is speculated that the addition of the compound represented by structural formula 1 into the electrolyte can form a phosphorus-containing inactive material layer with appropriate thickness and uniform distribution of phosphorus on the surface of the negative electrode, which can effectively prevent the electrode material from being further decomposed or destroyed, avoid lithium precipitation of the battery, reduce the impedance growth rate and expansion rate during high-temperature storage of the battery, and improve the high-temperature storage capacity retention rate of the battery. From the comparison of Embodiments 1-24, Comparative examples 5-6 and Comparative example 13, it can be seen that although the compound represented by structural formula 1 are also added in Comparative examples 5-6 and Comparative example 13, the lithium precipitated slightly on the negative electrode, and the high-temperature storage performance of the battery is not improved. This indicates that although the battery satisfies the relation of $3.1\leq\frac{a\times S}{W}\leq 60$, the content of the compound represented by structural formula 1 is higher than 1.8%. It is speculated that the phosphorus-containing inactive material layer formed on the surface of the negative electrode is destroyed or decomposed during the charging and discharging process, which indicates that the content of the compound represented by structural formula 1 in the electrolyte is higher than 1.8%, and the phosphorus-containing element in the phosphorus-containing inactive material layer formed on the surface of the negative electrode is not uniform or complete, which is not enough to effectively protect the battery, and the battery lithium precipitated slightly, which leads to poor high-temperature storage performance of the battery. In Comparative example 13, the content of the compound represented by structural formula 1 is less than 0.1%, and the thickness of the phosphorus-containing inactive material layer formed on the surface of the negative electrode is thin, resulting in poor high-temperature storage performance of the battery. From the comparison between Embodiments 1-24 and Comparative example 7, it can be seen that in Comparative example 7, the content of the compound represented by structural formula 1 is reduced, the relation expression is $\frac{a\times S}{W}\leq 3.1$, and lithium is moderately precipitated at the negative electrode. This indicates that the content of the compound represented by structural formula 1 in the electrolyte, S and W fall within the range defined by this application, but the battery does not meet the relation of $3.1\leq\frac{a\times S}{W}\leq 60$. It is speculated

that the phosphorus-containing inactive material layer formed on the surface of the negative electrode is cracked and exfoliated during the battery cycle, and lithium still slightly precipitates at the negative electrode, thus the battery has poor high-temperature storage performance. From the comparison between Embodiments 1-24 and Comparative examples 8-12, it can be seen that in Comparative example 8, the thickness of the phosphorus-containing inactive material layer formed on the surface of the negative electrode material layer is greater than 140 nm, and the battery does not meet the relation expression, so the battery precipitates lithium, and the impedance growth rate decreases. It is speculated that when the thickness of the phosphorus-containing inactive material layer formed on the surface of the negative electrode material layer is greater than 140 nm, the migration of lithium-ions is affected, and lithium slightly precipitates at the negative electrode. In Comparative examples 9 -10, the mass content (W) of the negative electrode active material contained in the negative electrode material layer per unit volume is not in the range of 1.5 $g/cm^3$-1.8$g/cm^3$, and the batteries from Comparative examples 11 -12 do not satisfy the relation $3.1 \leq \frac{a \times S}{W} \leq 60$, the probability of lithium precipitation at the negative electrode of the battery increases, and the battery has poor high-temperature storage capacity retention rate, high impedance growth rate and high expansion rate. It is speculated that when "W" is not in the range of 1.5-1.8$g/cm^3$, or the battery does not meet the relation expression, the phosphorus-containing inactive material layer formed on the surface of the negative electrode material layer would likely to be broken, which increases the probability of lithium precipitation at the negative electrode of the battery. Thus the battery has low high-temperature storage capacity retention rate, high impedance growth rate and high expansion rate.

Through the comparison of Embodiments 1-24, the mass content (W) of the negative electrode active material contained in the negative electrode material layer per unit volume is 1.6 $g/cm^3$~1.8$g/cm^3$, the mass content (a) of the compound represented by structural formula 1 is 0.1-1.5%, the thickness (S) of the phosphorus-containing inactive material layer formed on the negative electrode material layer surface is in the range of 30-100 nm, the lithium-ion battery satisfies the relation $5.5 \leq \frac{a \times S}{W} \leq 50$, so the battery has higher high-temperature cycle capacity retention rate, lower expansion rate and lower impedance growth rate.

(2) Test results obtained from Embodiments 3, 25-29 are shown in Table 4.

Table 4

| Group | Initial impedance of battery /mΩ | Storage at 60°C for 60 days | | | |
|---|---|---|---|---|---|
| | | Capacity retention rate /% | Impedance growth rate /% | Expansion rate /% | Whether lithium precipitated at the negative electrode |
| Embodiment 3 | 38.0 | 85.1 | 40.2 | 15.8 | No lithium precipitation |
| Embodiment 25 | 41.0 | 83.2 | 36.9 | 17.2 | No lithium precipitation |
| Embodiment 26 | 42.0 | 81.9 | 34.1 | 14.9 | Minor lithium precipitation |
| Embodiment 27 | 43.0 | 85.0 | 38.5 | 16.4 | No lithium precipitation |
| Embodiment 28 | 47.0 | 84.9 | 34.5 | 14.9 | No lithium precipitation |
| Embodiment 29 | 39.0 | 80.9 | 35.8 | 17.9 | Minor lithium precipitation |

From the tests of Embodiment 3 and Embodiment 25-29, it can be seen that when different compounds represented by structural formula 1 are added into the electrolyte, the effects are similar, which can all form a phosphorus-containing inactive material layer with a thickness in the range of 10-140 nm on the surface of the negative electrode material layer. This can effectively protect the battery, avoid further decomposition or damage of the electrode material, avoid or reduce lithium precipitation at the negative electrode, and reduce the impedance growth and expansion rate during high-temperature storage, thus improving the high-temperature storage capacity of the battery.

(3) Test results obtained from Embodiments 3 and 30-33 are shown in Table 5.

Table 5

| Group | Initial impedance of battery /mΩ | Storage at 60°C for 60 days | | | |
|---|---|---|---|---|---|
| | | Capacity retention rate /% | Impedance growth rate /% | Expansion rate /% | Whether lithium precipitated at the negative electrode |
| Embodiment 3 | 38.0 | 85.1 | 40.2 | 15.8 | No lithium precipitation |
| Embodiment 30 | 42.8 | 86.7 | 34.1 | 12.1 | Minor lithium precipitation |
| Embodiment 31 | 41.9 | 84.2 | 32.9 | 17.8 | No lithium precipitation |
| Embodiment 32 | 34.2 | 85.9 | 31.9 | 15.2 | No lithium precipitation |
| Embodiment 33 | 42.8 | 87.5 | 35.4 | 11.9 | No lithium precipitation |
| Comparative example 14 | 48.9 | 78.1 | 33.9 | 44.9 | Minor lithium precipitation |

From the comparison of Embodiment 3 and Embodiments 30-33, it is known that in the battery system provided by the present application, when other supplemental additives such as vinylene carbonate (VC), fluoroethylene carbonate (FEC), tri (trimethylsilane) borate (TMSB) and tri (trimethylsilane) phosphate (TMSP) are added to the electrolyte, they can all have synergistic effects with the compound represented by structural formula 1. A phosphorus-containing inactive material layer with a thickness of 10-140 nm can be formed on the surface of the negative electrode, and lithium is not precipitated or slightly precipitated at the negative electrode of the battery, thereby reducing the impedance growth rate and the expansion rate during high-temperature storage of the battery and improving the high-temperature storage capacity retention rate of the battery. It indicates that all the supplemental additives provided by this application can have a same synergistic effect with the compound represented by structural formula 1. Comparing Embodiment 30 with Comparative example 14, Comparative example 14 can form a phosphorus-containing inactive material layer with a thickness of 10-140 nm on the surface of the negative electrode material layer without adding the compound represented by structural formula 1, but lithium is slightly precipitated at the negative electrode, and the battery has a higher expansion rate and a lower capacity retention rate. It is speculated that adding supplemental additives in electrolyte can help form a phosphorus-containing inactive material layer with a thickness of 10-140 nm on the surface of the negative electrode material layer, but it is easy to be decomposed or destroyed.

The above are merely the preferred embodiments of this application, and are not intended to limit the application. Any modification, equivalent substitution and improvement made within the spirit and principle of this application shall be included in the protection scope of this application.

## Claims

**1.** A lithium-ion battery, comprising a positive electrode, a negative electrode and a non-aqueous electrolyte, wherein the negative electrode comprises a negative electrode material layer, the negative electrode material layer comprises a negative electrode active material containing a silicon-based material, and a phosphorus-containing inactive material layer is formed on a surface of the negative electrode material layer; wherein the non-aqueous electrolyte comprises a lithium salt containing $LiPF_6$, a non-aqueous organic solvent and an additive, and the additive comprises a compound represented by structural formula 1:

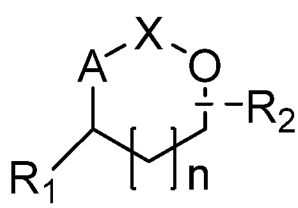

Structural formula 1

where n is 0 or 1, A is O, X is selected from

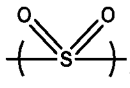 or 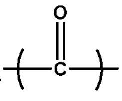,

$R_1$ and $R_2$ are each independently selected from H, halogen, an unsubstituted or halogen-substituted hydrocarbon group with 1-5 carbon atoms,

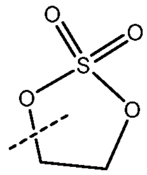, 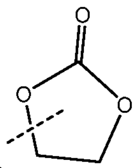 or 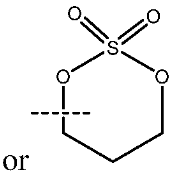,

at least one sulfur atom is present in X, $R_1$ or $R_2$;
the lithium-ion battery meets the following requirements:

$$3.1\le\frac{a\times S}{W}\le 60,\ 0.1\le a\le 1.8,\ 10\le S\le 140 \text{ and } 1.5\le W\le 1.8;$$

where, "a" is a percentage mass content of the compound represented by structural formula 1 in the non-aqueous electrolyte, in %;
"S" is a thickness of the phosphorus-containing inactive material layer formed on the negative electrode material layer surface, in nm; and
"W" is a mass content of the negative electrode active material contained in the negative electrode material layer per unit volume, in g/cm$^3$.

**2.** The lithium-ion battery of claim 1, wherein the lithium-ion battery meets the following requirements:

$$5.5\le\frac{a\times S}{W}\le 50.$$

**3.** The lithium-ion battery of claim 1, wherein the percentage mass content (a) of the compound represented by structural formula 1 is 0.1%-1.5% based on the mass of the non-aqueous electrolyte being 100%.

**4.** The lithium-ion battery of claim 1, wherein the thickness (S) of the phosphorus-containing inactive material layer formed on the negative electrode material layer surface is 30-100 nm.

**5.** The lithium-ion battery of claim 1, wherein the mass content (W) of the negative electrode active material contained in the negative electrode material layer per unit volume is 1.6-1.8 g/cm$^3$.

**6.** The lithium-ion battery of claim 1, wherein the compound represented by structural formula 1 is at least one selected from the group consisting of the following compounds 1 to 24:

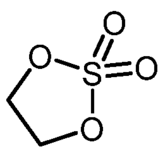
Compound 1

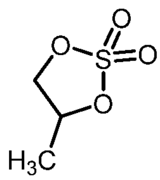
Compound 2

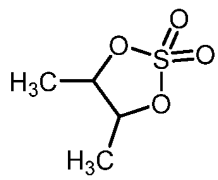
Compound 3

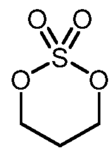
Compound 4

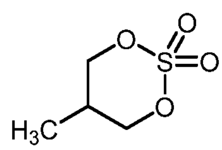
Compound 5

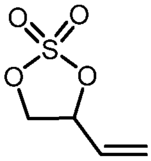
Compound 6

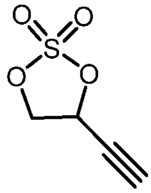
Compound 7

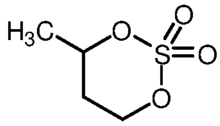
Compound 8

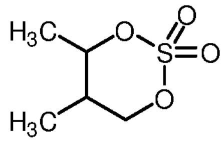
Compound 9

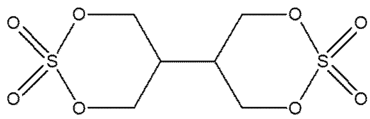
Compound 10

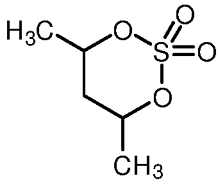
Compound 11

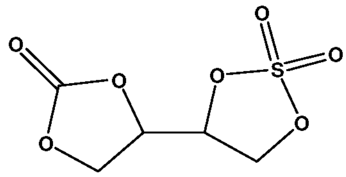
Compound 12

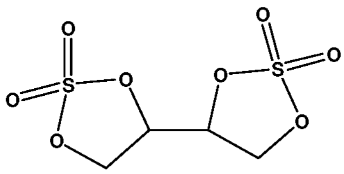
Compound 13

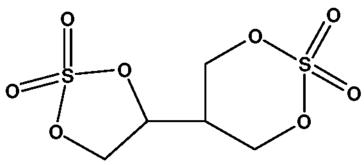
Compound 14

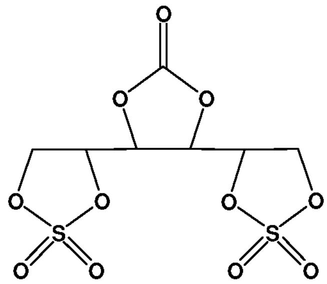
Compound 15

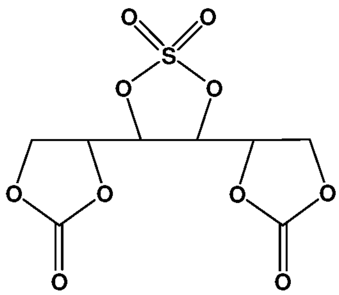
Compound 16

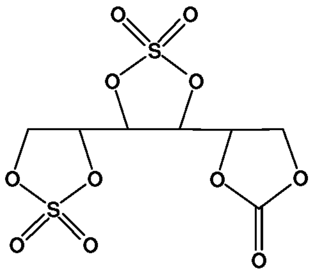
Compound 17

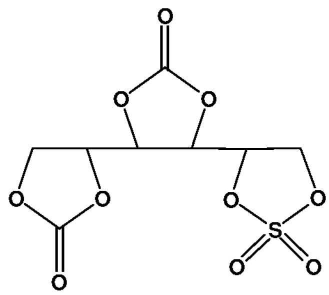
Compound 18

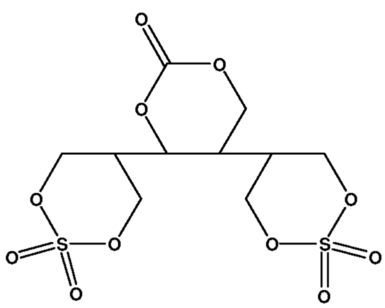
Compound 19

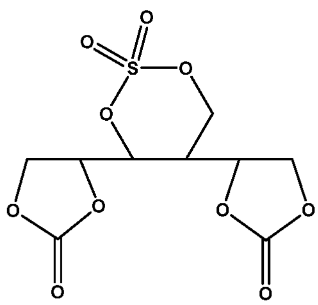
Compound 20

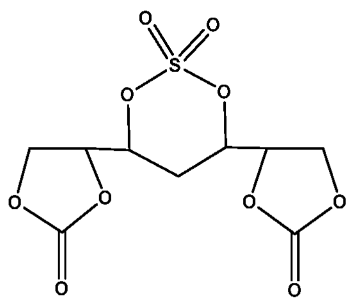
Compound 21

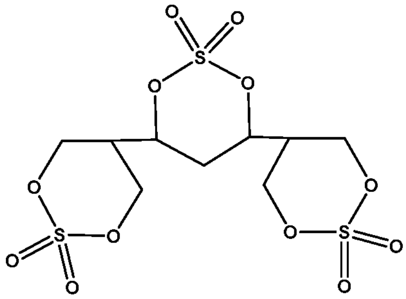
Compound 22

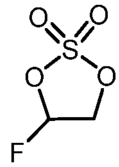
Compound 23

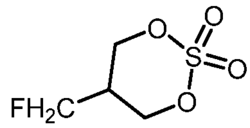
Compound 24.

7. The lithium-ion battery of claim 1, wherein the silicon-based material is selected from simple silicon or a composite material formed by compounding a silicon compound and graphite, and the simple silicon comprises at least one of nano silicon particles, silicon nanotubes, silicon nanowires, micro silicon particles and silicon films; the silicon compound comprises at least one of $SiO_x$ or silicate compound, where $0<x\leq 2$.

8. The lithium-ion battery of claim 1, wherein the lithium salt further comprises at least one selected from the group consisting of $LiPO_2F_2$, $LiBF_4$, LiBOB, $LiSbF_6$, $LiAsF_6$, $LiCF_3SO_3$, LiDFOB, $LiN(SO_2CF_3)_2$, $LiC(SO_2CF_3)_3$, $LiN(SO_2C_2F_5)_2$, $LiN(SO_2F)_2$, LiCl, LiBr, LiI, $LiClO_4$, $LiB_{10}Cl_{10}$, $LiAlCl_4$, lithium chloroborane, lithium lower aliphatic carboxylate with less than 4 carbon atoms, lithium tetraphenylborate and lithium imide.

9. The lithium-ion battery of claim 1, wherein a molar concentration of the lithium salt in the non-aqueous electrolyte is 0.8 mol/L-1.5 mol/L.

10. The lithium-ion battery of claim 1, wherein the additive further comprises a supplemental additive, and the supplemental additive comprises at least one of sultone compounds, cyclic carbonate compounds, phosphate compounds, borate compounds and nitrile compounds.

11. The lithium-ion battery of claim 10, wherein an addition amount of the supplemental additive is 0.01%-30% based on the total mass of the non-aqueous electrolyte being 100%.

12. The lithium-ion battery of claim 10, wherein the sultone compound is at least one selected from the group consisting of 1,3-propane sultone, 1,4-butane sultone and 1,3-propylene sultone;

the cyclic carbonate compound is at least one selected from the group consisting of vinylene carbonate, vinylethylene carbonate, fluoroethylene carbonate or a compound represented by structural formula 2;

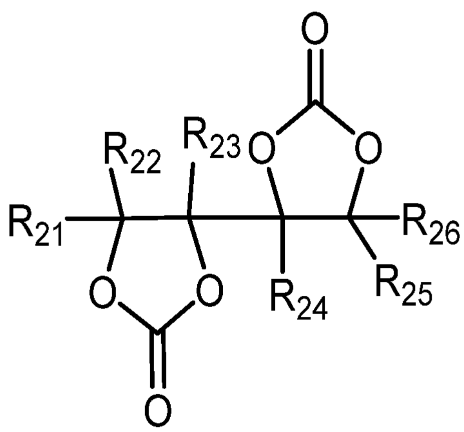
Structural formula 2

in structural formula 2, $R_{21}$, $R_{22}$, $R_{23}$, $R_{24}$, $R_{25}$ and $R_{26}$ are independently selected from one of a hydrogen atom, a halogen atom and a C1-C5 group;

the phosphate compound is at least one selected from the group consisting of tri (trimethylsilane) phosphate, tri (trimethylsilane) phosphite or a compound represented by structural formula 3:

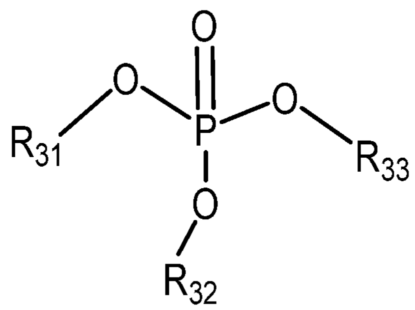

Structural formula 3

in structural formula 3, $R_{31}$, $R_{32}$ and $R_{33}$ are independently selected from a C1-C5 saturated hydrocarbon group, a C1-C5 unsaturated hydrocarbon group, a C1-C5 halogenated hydrocarbon group and $-Si(C_mH_{2m+1})_3$, m is a natural number of 1-3, and at least one of $R_{31}$, $R_{32}$ and $R_{33}$ is an unsaturated hydrocarbon group;
the borate compound is at least one selected from the group consisting of tris (trimethylsilane) borate and tris (triethyl silicane) borate; and
the nitrile compound is at least one selected from the group consisting of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

**INTERNATIONAL SEARCH REPORT**

International application No.
**PCT/CN2023/113028**

**A. CLASSIFICATION OF SUBJECT MATTER**

H01M10/0567(2010.01)i；H01M10/0525(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, DWPI, VEN: 新宙邦, 锂 s 电池, 锂盐, 存储容量, capchem, lithium s battery, storage w capacity, lithium w salt

**C. DOCUMENTS CONSIDERED TO BE RELEVANT**

| Category* | Citation of document, with indication, where appropriate, of the relevant passages | Relevant to claim No. |
|---|---|---|
| PX | CN 115189029 A (SHENZHEN CAPCHEM TECHNOLOGY CO., LTD.) 14 October 2022 (2022-10-14)<br>claims 1-10 | 1-12 |
| X | CN 114497692 A (SHENZHEN CAPCHEM TECHNOLOGY CO., LTD.) 13 May 2022 (2022-05-13)<br>embodiment 1 | 1-12 |
| A | CN 115036572 A (SHENZHEN CAPCHEM TECHNOLOGY CO., LTD.) 09 September 2022 (2022-09-09)<br>claims 1-10 | 1-12 |
| A | CN 109921092 A (SHANSHAN NEW MATERIALS (QUZHOU) CO., LTD.) 21 June 2019 (2019-06-21)<br>description, paragraphs 6-28 | 1-12 |
| A | WO 2022111344 A1 (SHENZHEN CAPCHEM TECHNOLOGY CO., LTD.) 02 June 2022 (2022-06-02)<br>embodiments 1-21 | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 October 2023** | **09 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
PCT/CN2023/113028

**C. DOCUMENTS CONSIDERED TO BE RELEVANT**

| Category* | Citation of document, with indication, where appropriate, of the relevant passages | Relevant to claim No. |
|---|---|---|
| A | EP 3979386 A1 (LG ENERGY SOLUTION, LTD. et al.) 06 April 2022 (2022-04-06) claims 1-13 | 1-12 |
| A | WO 2021135922 A1 (SHENZHEN CAPCHEM TECHNOLOGY CO., LTD.) 08 July 2021 (2021-07-08) embodiments 1-10 | 1-12 |

Form PCT/ISA/210 (second sheet) (July 2022)

**INTERNATIONAL SEARCH REPORT**
**Information on patent family members**

International application No.
**PCT/CN2023/113028**

| Patent document cited in search report | Publication date (day/month/year) | Patent family member(s) | Publication date (day/month/year) |
|---|---|---|---|
| CN 115189029 A | 14 October 2022 | CN 115189029 B | 17 January 2023 |
| CN 114497692 A | 13 May 2022 | CN 114497692 B | 09 May 2023 |
| CN 115036572 A | 09 September 2022 | None | |
| CN 109921092 A | 21 June 2019 | CN 109921092 B | 19 January 2021 |
| WO 2022111344 A1 | 02 June 2022 | CN 112271337 A | 26 January 2021 |
| EP 3979386 A1 | 06 April 2022 | EP 3979386 A4 | 14 September 2022 |
| | | US 2022263113 A1 | 18 August 2022 |
| | | KR 20210039816 A | 12 April 2021 |
| | | WO 2021066462 A1 | 08 April 2021 |
| WO 2021135922 A1 | 08 July 2021 | WO 2021135922 A9 | 19 May 2022 |

Form PCT/ISA/210 (patent family annex) (July 2022)